# FASCICULE DE BREVET EUROPEEN

(11) **EP 4 111 249 B1**
(45) Date de publication et mention de la délivrance du brevet: **30.10.2024**
(21) Numéro de dépôt: 21706003.7
(22) Date de dépôt: 23.02.2021
(51) Int. Cl.: G06V 20/69, G02B 21/36

(54) **PROCÉDÉ DE GESTION DE BLOCS DE COMMANDES DESTINÉS À UN SYSTÈME D'IMAGERIE EN MICROSCOPIE, PROGRAMME D'ORDINATEUR, MOYEN DE STOCKAGE ET DISPOSITIF CORRESPONDANTS DOMAINE TECHNIQUE**
VERFAHREN ZUR VERWALTUNG VON BLÖCKEN VON BEFEHLEN, DIE FÜR EIN MIKROSKOPIEABBILDUNGSSYSTEM VORGESEHEN SIND, COMPUTERPROGRAMM, SPEICHERVORRICHTUNG UND ENTSPRECHENDES GERÄT
METHOD FOR MANAGING BLOCKS OF COMMANDS INTENDED FOR A MICROSCOPY IMAGING SYSTEM, COMPUTER PROGRAM, STORAGE MEANS AND CORRESPONDING DEVICE - TECHNICAL FIELD

(30) Priorité: 24.02.2020 FR 2001798
(43) Date de publication de la demande: 04.01.2023
(73) Titulaire: Inscoper, 35510 Cesson-Sevigne (FR); Centre National de la Recherche Scientifique, 75016 Paris Cedex 16 (FR); Université de Rennes 1, 35065 Rennes Cedex (FR)
(72) Inventeur: BALLUET, Maël, 35740 PACE (FR); PECREAUX, Jacques, 35310 MORDELLES (FR); BOUCHAREB, Otmane, 35510 CESSON-SEVIGNE (FR); TRAMIER, Marc, 35000 RENNES (FR); GIROUX, Baptiste, 35700 RENNES (FR); PONT, Jérémy, 35520 LA CHAPELLE DES FOUGERETZ (FR); CHANTEUX, Olivier, 35510 CESSON-SEVIGNE (FR)
(74) Mandataire: Vidon Brevets & Stratégie
(86) Numéro de dépôt international: PCT/EP2021/054413
(87) Numéro de publication internationale: WO 2021/170565

(56) Documents cités:
- EP-A1- 1 865 073
- WO-A1-2017/197217
- US-A1- 2010 251 438
- US-A1- 2014 333 723

## Description

L'invention se situe dans le domaine des systèmes d'imagerie. Plus particulièrement, l'invention concerne une technique de gestion de commandes de pilotage destinées à un dispositif d'imagerie en microscopie, pour l'acquisition d'images d'un échantillon en temps réel.

L'invention s'applique notamment, mais non exclusivement, au domaine de l'imagerie d'échantillons biologiques par fluorescence multi-longueur d'onde, pour la visualisation et l'analyse notamment d'évènements dynamiques cellulaires.

### Art antérieur

On s'attache plus particulièrement dans la suite de ce document à décrire la problématique existant dans le domaine de l'imagerie en microscopie de fluorescence, à laquelle ont été confrontés les inventeurs de la présente demande de brevet. L'invention ne se limite bien sûr pas à ce domaine particulier d'application, mais présente un intérêt pour toute technique de gestion de commandes de pilotage d'un dispositif d'imagerie devant faire face à une problématique proche ou similaire.

La société INSCOPER en collaboration avec l'Institut de Génétique et Développement de Rennes (IGDR) a développé une solution d'imagerie basée sur la microscopie de fluorescence, pour étudier la dynamique des activités biochimiques (comme le métabolisme cellulaire par exemple) ou biophysiques (comme la dynamique de la division cellulaire) d'échantillons vivants. Cette approche correspond à une forte demande des biologistes souhaitant disposer d'une technique d'analyse spatio-temporelle et *in vivo,* adaptée aux événements biologiques transitoires, et offrant la possibilité d'accéder à des informations fonctionnelles sur les cellules vivantes observées. La compréhension de la dynamique spatio-temporelle de ces évènements cellulaires est un enjeu important pour mieux comprendre par exemple l'origine et les mécanismes de certaines pathologies encore mal comprises aujourd'hui.

Les techniques récentes d'observation en temps réel d'évènements cellulaires reposent sur l'utilisation d'un dispositif d'imagerie en microscopie de fluorescence. Un tel dispositif consiste à imager un échantillon soumis à différentes longueurs d'onde d'excitation. Il se compose d'un certain nombre de modules fonctionnels, et notamment : une source de lumière, un microscope optique, un module de capture d'image, un couple de modules de sélection en longueur d'onde et une unité de pilotage. Le microscope comprend, de manière classique, un système optique de grossissement de l'échantillon, un module de positionnement de l'échantillon et un miroir dichroïque. Quant aux modules de sélection, ils se présentent chacun typiquement sous la forme d'un disque mobile en rotation, doté d'un ensemble de filtres optiques (filtres passe bande ou passe bas par exemple), chaque filtre permettant de sélectionner une longueur d'onde souhaité en fonction du filtre présenté (longueur d'onde d'excitation ou de fluorescence). Le microscope optique peut être en outre équipée d'une tête confocale ou multi-focale en fonction des applications. L'acquisition des images de l'échantillon soumis à une lumière d'excitation donnée est réalisée au moyen du module de capture.

Pour réaliser une acquisition de fluorescence multi-longueur d'onde, chaque module fonctionnel du dispositif d'imagerie est piloté au moyen de séquences de commandes émises successivement par l'unité de pilotage, de sorte que chacun de ces modules réalise la fonction qui lui est associée en vue d'une séquence d'acquisition d'image(s). Une séquence de commandes typiquement comprend une pluralité de commandes de pilotage servant à piloter les différents modules fonctionnels, chaque commande de pilotage étant définie par un ou plusieurs paramètres d'acquisition. A titre d'exemple, une commande de pilotage destinée au module de sélection en longueur d'onde d'excitation signifie que ce module, sur réception de ladite commande, doit sélectionner une longueur d'onde d'excitation donnée, le paramètre d'acquisition défini par ladite commande étant une information représentative de la valeur de la longueur d'onde d'excitation à sélectionner.

Une technique de pilotage multi-module classique et reconnue pour imager un échantillon biologique en microscopie de fluorescence multi-longueur d'onde, est présentée dans la publication Conrad et al. "Micropilot: automation of fluorescence microscopy-based imaging for systems biology" [Nature Methods volume 8, pages 246-249 (2011*)].* Une telle technique connue repose sur le mécanisme d'asservissement suivant :
- l'unité de pilotage exécute plusieurs itérations d'une séquence de commandes de premier type, dite « séquence de recherche grossière », cette séquence de recherche étant préalablement définie par un premier jeu de paramètres d'acquisition adapté pour que le dispositif d'imagerie acquiert une première série d'images en basse résolution et plein champ de l'échantillon ;
- une fois cette phase de recherche terminée, l'unité de pilotage procède à une analyse des images basses résolutions et vérifie si un événement d'intérêt y est détecté ;
- et en cas de vérification positive, l'unité de pilotage exécute une séquence de commandes de deuxième type, davantage ciblée sur l'évènement d'intérêt détecté, cette séquence étant définie par un deuxième jeu de paramètres d'acquisition prédéfinis, adapté pour acquérir des images haute résolution de l'échantillon.

Cette technique connue présente toutefois un certain nombre d'inconvénients. Bien qu'elle permette l'acquisition d'objets biologiquement vivants, cette technique connue n'est pas adaptée à la capture de phénomènes biologiques dynamiques et rapides (typiquement ayant une durée de vie inférieure à quelques secondes). En effet, l'approche séquentielle et exhaustive d'exécution des séquences de commande de pilotage et d'analyse d'image associée rend difficile, voire impossible, une acquisition en temps réel des phénomènes observés. Par exemple, dans le cas de certains phénomènes biologiques rares et de très courtes durées (tels que la rupture de l'enveloppe nucléaire ou la transition métaphase-anaphase au cours de la division cellulaire par exemple), la durée nécessaire à l'exécution d'une séquence de commandes prédéfinie, à l'analyse d'images subséquente et à l'adaptation éventuelle des paramètres d'acquisition ne permet pas de garantir la capture de ces phénomènes éphémères, l'asservissement du dispositif d'imagerie dans ses différentes fonctionnalités requérant un délai de traitement bien supérieur à celle du phénomène biologique. Aussi, un certain nombre d'images de l'échantillon est acquis sans intérêt pour la suite de l'expérimentation. Ceci alourdit inutilement le traitement des données et implique un temps d'analyse conséquent, rendant les chances d'observation et de capture de ces phénomènes éphémères fortement réduites. De plus, cela dégrade inutilement l'échantillon.

Enfin, le manque de souplesse du mécanisme de gestion des séquences de commandes mis en oeuvre par l'unité de pilotage, ainsi que le nombre élevé de couches logicielles exécutées par celui-ci rendent ce système de microscopie relativement lent et complexe à mettre en oeuvre en pratique.

Les documents EP 1865073 A1 et US 2014/333723 A1 décrivent des procédés de gestion de blocs de commandes connus.

Il apparaîtrait donc particulièrement intéressant de pouvoir disposer d'une technique qui permette un pilotage plus efficace du dispositif d'imagerie de manière à pouvoir augmenter les chances d'imager un événement d'intérêt d'un échantillon, et en particulier un événement d'intérêt de courte durée.

### Résumé de l'invention

L'invention, dans au moins un mode de réalisation, a notamment pour objectif de pallier ces différents inconvénients de l'état de la technique.

Dans un mode de réalisation particulier de l'invention, il est proposé un procédé de gestion de blocs de commandes destinés à un dispositif d'imagerie en microscopie configuré pour acquérir des images d'un échantillon, chaque bloc de commandes comprenant une pluralité de commandes de pilotage servant à piloter une pluralité de modules fonctionnels dudit dispositif, chaque commande étant définie par au moins un paramètre d'acquisition, ledit procédé comprenant une étape consistant à exécuter au moins une itération d'un premier bloc de commandes prédéfini pour acquérir au moins une première image dudit échantillon. Le procédé est tel qu'il comprend en outre les étapes suivantes, sur vérification positive, par analyse d'image de ladite au moins une première image, d'une première condition d'interruption au cours d'une itération courante dudit premier bloc :
- interrompre ladite itération courante dudit premier bloc ; et
- exécuter au moins une itération d'un deuxième bloc de commandes prédéfini pour acquérir au moins une deuxième image dudit échantillon, au moins une commande dudit deuxième bloc étant définie par au moins un deuxième paramètre d'acquisition, lui-même défini dynamiquement en fonction d'au moins une information résultant de ladite analyse d'image.

Le principe général de l'invention repose ainsi sur un mécanisme innovant permettant d'asservir en temps réel le pilotage des modules du dispositif à l'analyse des images acquises. Ce mécanisme repose sur la possibilité d'interrompre en cours d'exécution un premier bloc de commandes de pilotage prédéfini lorsqu'une condition d'interruption est vérifiée, pour basculer immédiatement sur au moins une itération d'un deuxième bloc de commandes prédéfini dont le paramétrage est défini dynamiquement en fonction des résultats de l'analyse d'image venant d'être effectuée. Ainsi, non seulement cette approche est astucieuse car elle prévoit une interruption d'un bloc de commandes en cours d'exécution (c'est-à-dire sans attendre la fin d'exécution de ce bloc de commandes) pour en exécuter immédiatement un autre, mais elle est particulièrement efficace car elle tient compte de l'analyse d'image effectuée pour adapter en temps réel les paramètres d'acquisition. Ainsi, contrairement au procédé classique de l'art antérieur, la présente invention repose sur un pilotage dynamique des modules fonctionnels, particulièrement bien adapté à l'acquisition d'évènements transitoires et rapides, tels que le suivi sélectif d'évènements biologiques d'intérêt en cellule vivante. On entend par « bloc de commandes », des commandes de pilotage exécutées en série (on parlera alors de « séquences de commandes ») et/ou des commandes de pilotage exécutées en parallèle. A noter également qu'un bloc de commandes prédéfini peut aussi bien être défini avec un ou plusieurs paramètres d'acquisition prédéfinis et/ou un ou plusieurs paramètres d'acquisition définis dynamiquement (en fonction des résultats d'analyse d'une précédente itération). Par exemple, à l'initialisation du procédé, seules des commandes de pilotage prédéfinies à l'avance par l'utilisateur ou la machine sont envoyées aux différents modules fonctionnels concernés.

Selon un aspect particulier, le procédé comprend les étapes suivantes, sur vérification positive, par analyse d'image de ladite au moins une deuxième image, d'une deuxième condition d'interruption au cours d'une itération courante dudit deuxième bloc :
- interrompre ladite itération courante dudit deuxième bloc ; et
- exécuter au moins une itération d'un troisième bloc de commandes prédéfini pour acquérir au moins une troisième image dudit échantillon, au moins une commande dudit troisième bloc étant définie par au moins un troisième paramètre d'acquisition, lui-même prédéfini ou défini dynamiquement en fonction d'au moins une information résultant de l'analyse de ladite au moins une deuxième image.

Ainsi, l'invention offre la possibilité d'interrompre en cascade les différents blocs de commandes envoyée au dispositif d'imagerie. En effet, après avoir interrompu un premier bloc de commandes, un deuxième bloc de commandes peut lui-même être interrompu pour un troisième bloc de commandes, et ainsi de suite, sur la base du principe général précité. Le troisième bloc de commandes - qui est à exécuter
- est défini avec des paramètres d'acquisition déterminés dynamiquement et/ou avec des paramètres d'acquisition entièrement prédéfinis. La nature du paramétrage (défini ou prédéfini) ainsi que la valeur des paramètres dépendent des résultats de l'analyse d'image réalisée au cours de la ou des itérations précédentes.

Avantageusement, les première et deuxième conditions d'interruption appartiennent au groupe comprenant : détection d'au moins un événement d'intérêt au cours de ladite analyse d'image, absence d'événement d'intérêt au cours de ladite analyse d'image.

Ainsi, lorsqu'au moins un événement d'intérêt est repéré, le procédé interrompt le bloc de commandes en cours d'exécution (par exemple un bloc de commandes dédié à la recherche d'un objet biologique appartenant à une certaine classe) pour basculer directement sur au moins une itération d'un autre bloc de commandes (par exemple un bloc de commandes dédié à la description de cet objet biologique). Et lorsqu'au bout de N itération(s) (avec N un nombre entier strictement supérieur à zéro) ou bien au bout d'une durée prédéterminée aucun événement d'intérêt n'est détecté, le procédé peut aussi décider d'interrompre le bloc de commandes en cours d'exécution afin de basculer directement sur un autre bloc de commandes en vue de modifier les paramètres d'acquisition des images de l'échantillon. Ceci permet de gagner en temps et en efficacité, en particulier lorsque les commandes de pilotage en cours d'exécution ne permettent pas d'acquérir l'événement d'intérêt recherché.

De manière avantageuse, si une pluralité d'événements d'intérêt est détectés, le procédé comprend, pour chaque événement d'intérêt de la pluralité :
- exécuter ladite au moins une itération du deuxième bloc pour ledit événement d'intérêt ;
- définir dynamiquement ledit au moins un deuxième paramètre d'acquisition en fonction d'au moins une information résultant de ladite analyse d'image associé audit événement d'intérêt.

Ainsi, une acquisition d'image peut alors être rapidement réalisé pour chaque événement d'intérêt détecté, ce qui est particulièrement intéressant pour acquérir des images précises d'évènements transitoires.

Selon une caractéristique particulière, ladite au moins une information appartient au groupe comprenant : une information relative à la nature dudit moins un événement d'intérêt, une information de position dudit moins un événement d'intérêt. De cette manière, il est possible d'adapter les paramètres d'acquisition en fonction de la nature des événements d'intérêts détectés (du fait qu'ils ont été reconnus comme appartenant à une classe d'objet prédéterminée) et/ou de la position des événements d'intérêts détectés dans les images.

Selon un autre aspect particulier de l'invention, les commandes de pilotage desdits premier, deuxième et troisième blocs de commandes appartiennent au groupe comprenant : sélection d'une source de lumière d'excitation de l'échantillon, sélection d'au moins un paramètre d'une source de lumière d'excitation de l'échantillon, sélection de longueur d'onde d'excitation de l'échantillon, déplacement spatial de l'échantillon, capture d'image de l'échantillon, sélection de longueur d'onde de détection, réglage d'au moins un paramètre d'un système optique. De cette manière, plusieurs modules fonctionnels peuvent être sollicités pour participer à l'acquisition des images. On parle alors des différentes fonctionnalités du dispositif d'imagerie.

Selon un autre aspect particulier de l'invention, les premier, deuxième et troisième paramètres d'acquisition appartiennent au groupe comprenant : une donnée représentative d'un type de source lumineuse à activer, une donnée représentative d'une valeur de puissance lumineuse, une donnée représentative d'un nombre d'images à acquérir, une donnée représentative d'une valeur de fréquence d'acquisition, une donnée représentative d'une valeur ou plage de valeurs de longueurs d'onde d'excitation, une donnée représentative d'au moins une coordonnée spatiale relative à la position de l'échantillon, une donnée représentative d'une valeur ou plage de valeurs de longueurs d'onde de détection, une donnée représentative d'une valeur de grossissement du système optique. De cette façon, il est possible de jouer sur un grand nombre de paramètres d'acquisition, rendant le processus d'acquisition des images d'autant plus souple et hautement configurable.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Selon encore un autre aspect, la technique proposée se rapporte à un produit programme d'ordinateur téléchargeable depuis un réseau de communication et/ou stocké sur un support lisible par ordinateur et/ou exécutable par un microprocesseur, comprenant des instructions de code de programme pour l'exécution d'un procédé de gestion tel que décrit précédemment.

Selon une implémentation particulière, les différentes étapes du procédé de gestion sont ainsi mises en oeuvre par un ou plusieurs logiciels ou programmes d'ordinateur, comprenant des instructions logicielles destinées à être exécutées par un processeur de données selon la technique proposée et étant conçu pour commander l'exécution des différentes étapes du procédé. En conséquence, la technique proposée vise aussi un programme, susceptible d'être exécuté par un ordinateur ou par un processeur de données, et en particulier un processeur sécurisé, ce programme comportant des instructions pour commander l'exécution des étapes d'un procédé tel que mentionné ci-dessus. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation). En d'autres termes, la technique proposée vise aussi un support d'informations lisible par un processeur de données, et comportant des instructions d'un programme tel que mentionné ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet. En variante, le support d'informations peut être un circuit intégré dans lequel le programme est incorporé, le circuit étant adapté pour exécuter ou pour être utilisé dans l'exécution du procédé en question.

Selon un mode de réalisation particulier, la technique proposée est mise en oeuvre au moyen de composants logiciels et/ou matériels. Dans cette optique, le terme « module » peut correspondre aussi bien à un composant logiciel, qu'à un composant matériel ou à un ensemble de composants matériels et logiciels. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.). De la même manière, un composant matériel correspond à tout élément d'un ensemble matériel (ou « hardware ») apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (« firmware »), etc. Chaque composante du système précédemment décrit met bien entendu en oeuvre ses propres modules logiciels. Les différents modes de réalisation mentionnés ci-dessus sont combinables entre eux pour la mise en oeuvre de l'invention.

Dans un autre mode de réalisation de l'invention, il est proposé un dispositif de gestion de blocs de commandes destinés à un dispositif d'imagerie en microscopie configuré pour acquérir des images d'un échantillon, chaque bloc de commandes comprenant une pluralité de commandes de pilotage servant à piloter une pluralité de modules fonctionnels dudit dispositif, chaque commande étant définie par au moins un paramètre d'acquisition, ledit dispositif comprenant :
- des moyens configurés pour exécuter au moins une itération d'un premier bloc de commandes prédéfini afin d'acquérir au moins une première image dudit échantillon ;
- des moyens configurés pour vérifier, par analyse d'image de ladite au moins une première image, une première condition d'interruption au cours d'une itération courante dudit premier bloc ;
- des moyens configurés pour décider, en cas de vérification positive de la première condition d'interruption :
   * d'interrompre ladite itération courante dudit premier bloc, et
   * d'exécuter au moins une itération d'un deuxième bloc de commandes prédéfini pour acquérir au moins une deuxième image dudit échantillon, au moins une commande dudit deuxième bloc étant définie par au moins un deuxième paramètre d'acquisition, lui-même défini dynamiquement en fonction d'au moins une information résultant de ladite analyse d'image.

Avantageusement, le dispositif de gestion comprend des moyens de mise en oeuvre des étapes qu'il effectue dans le procédé de gestion tel que décrit précédemment, dans l'un quelconque de ses différents modes de réalisation.

### Figures

D'autres caractéristiques et avantages de l'invention apparaîtront à la lecture de la description suivante, donnée à titre d'exemple indicatif et non limitatif, et des dessins annexés, parmi lesquels :
la Figure 1 représente un organigramme générique d'un mode de réalisation particulier du procédé selon l'invention ;
la Figure 2 représente un synoptique d'un système d'imagerie en microscopie selon un mode de réalisation particulier de l'invention ;
la Figure 3 illustre un chronogramme illustrant le principe du procédé de gestion selon l'invention et comparé au procédé connu de l'état de la technique décrit plus haut ;
la Figure 4 illustre un exemple schématique d'images acquises au cours du procédé selon l'invention ;
la Figure 5 présente un schéma simplifié de la structure d'un dispositif apte à mettre en oeuvre le procédé de gestion selon un mode de réalisation particulier de l'invention ;
la Figure 6 est un organigramme illustrant un exemple de mise en oeuvre d'une séquence de commande selon l'invention.

### Description détaillée de l'invention

Le principe général de l'invention consiste à mettre en oeuvre un mécanisme d'interruption de séquences de commandes en cours d'exécution de manière à adapter en temps réel et de manière totalement automatique les paramètres d'acquisition en fonction des images qui viennent d'être acquises, et à intégrer ces paramètres dans la séquence de commandes subséquente à exécuter. Ainsi, le fait de conditionner l'utilisation combinée d'un mécanisme d'interruption et de paramètres d'acquisition dynamiquement adaptables à l'analyse d'image, permet de réaliser un pilotage rapide et pertinent des modules fonctionnels du dispositif, particulièrement bien adapté à l'acquisition d'évènements transitoires et rapides, tels que le suivi sélectif d'évènements biologiques d'intérêt en cellule vivante.

On s'attache plus particulièrement dans la suite de ce document à décrire l'invention dans le cadre d'une acquisition d'image en microscopie de fluorescence. Bien entendu, il s'agit là d'un exemple d'application particulier, cet exemple pouvant être adapté suivant d'autres modalités, tel que par exemple le contraste interférentiel (ou DIC), le contraste Normarsky ou le contraste de phase, à d'autres applications sans sortir du cadre de l'invention.

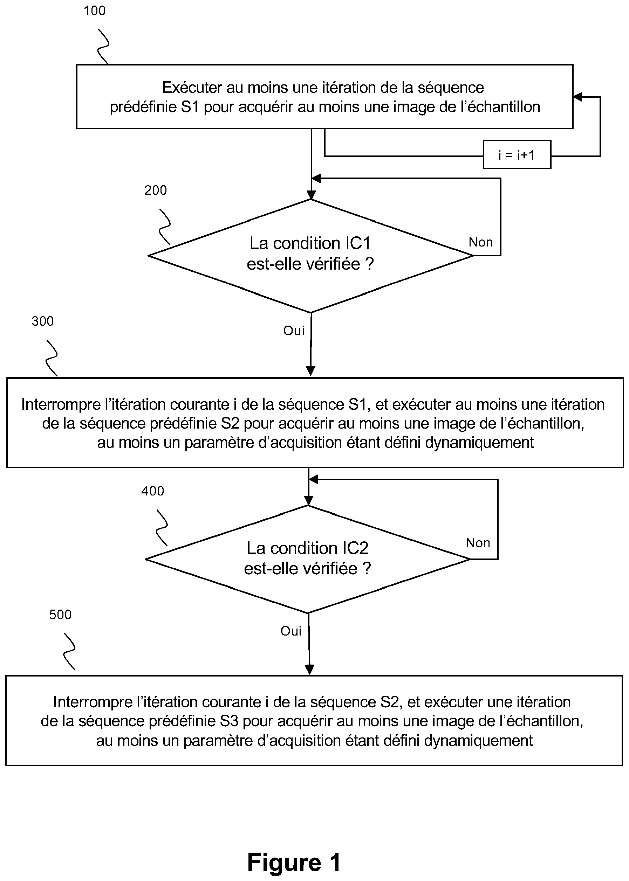

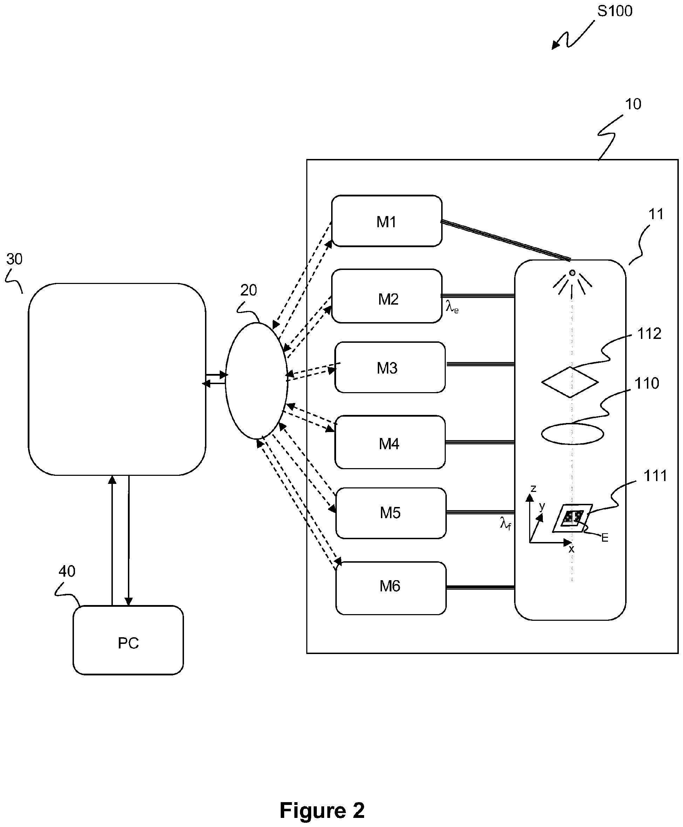

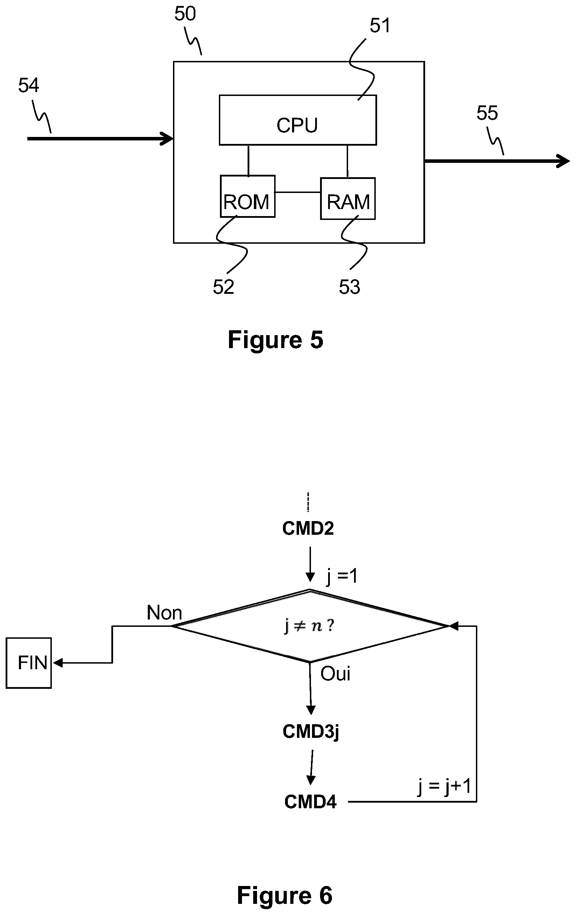

On présente, en relation avec la **figure 1**, les principales étapes du procédé de gestion selon un mode de réalisation particulier de l'invention. Le procédé est mis en oeuvre par un dispositif de gestion dédié (dont le principe est décrit en détail plus loin en relation avec la figure 5). La **figure 2** illustre par ailleurs un exemple de système d'imagerie en microscopie de fluorescence dans lequel le procédé de gestion est mis en oeuvre.

Ce système d'imagerie, référencé S100, comprend un dispositif d'imagerie 10, un module de contrôle 20, un dispositif de gestion 30 et un ordinateur (PC) 40 équipé d'une interface homme-machine. Le dispositif d'imagerie 10 comprend lui-même un microscope optique 11 et un ensemble de six périphériques, appelés modules fonctionnels. Le microscope optique 11 est équipé principalement d'un système optique de grossissement de l'échantillon 110, d'une platine porte-échantillon motorisée 111 et d'un miroir dichroïque 112. Ces éléments sont disposés les uns par rapport aux autres de manière à ce que l'échantillon E se situe sensiblement dans le plan focal du système optique.

On considère dans la suite de la description que l'échantillon à imager contient des cellules vivantes, ces cellules étant intrinsèquement fluorescentes. Ces cellules vivantes ont donc subi une préparation préalable soit de marquage à l'aide d'une substance fluorescente, soit d'expression d'un gène codant pour une protéine fluorescente. Cette substance fluorescente choisie ici possède la propriété d'émettre une lumière fluorescente dans le domaine du visible, lorsqu'elle est soumise à une lumière d'excitation spécifique. Par exemple, le marquage utilisé ici est basée sur une protéine fluorescente verte, par exemple la protéine GFP (« *Green Fluorescent Protein* ») de longueur d'onde de fluorescence comprise entre 500 et 550 nm (avec une valeur maximale de 505 nm pour une longueur d'onde d'excitation de 480 nm). Il s'agit bien sûr d'un exemple illustratif, l'utilisation d'autres longueurs d'onde d'excitation et de fluorescence étant bien entendu envisageable sans sortir du cadre de l'invention. De même, l'utilisation d'autres modalités de microscopie tel que le contraste interférentiel, le contraste de Normarsky ou de phase, est aussi envisageable sans sortir du cadre de l'invention.

Le dispositif de gestion 30 est configuré pour piloter les modules fonctionnels M1-M6 du dispositif d'imagerie 10 au moyen de commandes de pilotage émises par le module de contrôle 20. Chacun des modules fonctionnels M1-M6 est adapté pour réaliser une fonction qui lui est propre sur réception d'une commande de pilotage commandé par le dispositif de gestion 30 et envoyé par le module de contrôle 20.

### Les modules fonctionnels

Dans le mode de réalisation particulier illustré ici, le dispositif d'imagerie 10 comprend les modules fonctionnels suivants :
- un module d'émission de lumière **M1** adapté pour réaliser une fonction F1 qui consiste émettre une lumière dans le domaine du visible à champ large destinée à illuminer et exciter l'échantillon E (par exemple une source de lumière blanche incohérente type Xenon ou DEL adaptée à l'imagerie de fluorescence de l'échantillon E et coopérant avec un système optique de formation de faisceau en champ large) ;
- un module de sélection de longueurs d'onde d'excitation **M2**, par exemple un disque mobile en rotation doté d'un ensemble de filtres optiques, adapté pour réaliser une fonction F2 qui consiste à sélectionner, par filtrage optique de la lumière produite par la source lumineuse sélectionnée, la longueur d'onde ou une plage de longueurs d'onde d'excitation de l'échantillon E (notée λₑ) ;
- un module de déplacement de l'échantillon **M3**, coopérant avec le porte-échantillon 111, et adapté pour réaliser une fonction F3 qui consiste à déplacer le porte-échantillon 111 dans au moins une dimension de l'espace selon un repère prédéterminé ;
- un module de capture d'image **M4**, par exemple une caméra du type CCD (pour « *Charged Couple Device* ») ou CMOS (pour « *Complémentary Metal Oxyde Semiconductor »*) sensible à l'ensemble du spectre de la lumière visible 400 - 800 nm, adapté pour réaliser une fonction F4 qui consiste à capturer au moins une image de l'échantillon E ;
- un module de sélection de longueur d'onde de fluorescence **M5**, par exemple un disque mobile en rotation doté d'un ensemble de filtres optiques, adapté pour réaliser une fonction F3 qui consiste à sélectionner, par filtrage optique de la lumière fluorescente réémise par l'échantillon E, une longueur d'onde ou une plage de longueurs d'onde de fluorescence (notée λ_{f} par la suite) ;
- un module de réglage du système optique **M6**, adapté pour réaliser une fonction F6 qui consiste à régler au moins un paramètre du système optique équipant le microscope 11.

### Les commandes de pilotage et leurs paramètres

D'une manière générale, une séquence de commandes orchestrée par le dispositif de gestion 30 et exécutée par l'intermédiaire du module de contrôle 20 est composée d'une pluralité de commandes de pilotage envoyées successivement aux modules fonctionnels concernés par la séquence. Tous les modules fonctionnels pilotables ne sont pas nécessairement concernés par une séquence de commandes. D'autre part, une commande de pilotage peut être définie par un ou plusieurs paramètres d'acquisition.

Une caractéristique particulièrement avantageuse de l'invention réside dans le fait qu'un paramètre d'acquisition selon l'invention peut être défini de deux façons : soit le paramètre est prédéfini, c'est-à-dire défini au préalable par l'utilisateur, soit le paramètre est défini de manière dynamique et entièrement automatique en fonction d'informations résultant d'une analyse d'image de l'échantillon.

On présente ci-après, à titre d'exemple, une liste de commandes de pilotage et de paramètres d'acquisition associés utilisés dans le cadre du mode de réalisation particulier des figures 1 et 2 :
- la commande de pilotage CMD1 est destinée au module M1 pour réaliser la fonction F1. Cette commande CMD1 est définie par une donnée représentative d'une valeur puissance lumineuse « P » (par exemple 250 mW) ;
- la commande de pilotage CMD2, destinée au module M2 pour réaliser la fonction F2, est définie par une donnée représentative d'une valeur ou plage de valeurs de longueurs d'onde d'excitation « λₑ » (par exemple la longueur d'onde 480 nm) ;
- la commande de pilotage CMD3, destinée au module M3 pour réaliser la fonction F3, est définie par une donnée représentative des coordonnées spatiales « (x,y,z) » d'un point de référence de la platine porte-échantillon 111 dans un repère prédéfini (O; X,Y,Z) ;
- la commande de pilotage CMD4, destinée au module M4 pour réaliser la fonction F4, est définie par une donnée représentative du nombre d'images à acquérir « n » (n étant un entier positif non nul), d'une durée d'exposition « tₑₓₚ » et d'une valeur de vitesse (ou de fréquence) de capture d'image « v »;
- la commande de pilotage CMD5, destinée au module M5 pour réaliser la fonction F5, est définie par une donnée représentative d'une valeur ou plage de valeurs de longueurs d'onde de fluorescence « λ_{f} » (par exemple la longueur d'onde 508 nm) ;
- la commande de pilotage CMD6, destinée au module M6 pour réaliser la fonction F6, est définie par une donnée représentative d'une valeur de grossissement « G » du microscope 11.

La liste présentée ci-dessus comme exemple illustratif ne contient que des commandes de pilotage de même type, référencées CMD. Bien entendu, plusieurs types de commande peuvent être envisagés sans sortir du cadre de l'invention, qu'elles soient numériques ou analogiques. On peut citer par exemple les commandes numériques du type USB, RS232 ou FireWire, sans que cette liste soit exhaustive. Une séquence de commandes de différents types est également envisageable dans le cadre de l'invention. Ainsi, une commande de pilotage du type USB peut être suivie ou précédée de, ou exécutée de manière simultanée avec, une commande du type TTL ou encore analogique.

On considère dans la suite de la description que le pilotage des modules fonctionnels mis en oeuvre ici repose de manière avantageuse sur la technique de pilotage multi-module détaillée dans le document de brevet FR3019324. Cette technique repose sur la mise en oeuvre d'un mécanisme d'échange bidirectionnel de commandes de pilotage entre modules fonctionnels eux-mêmes, sans passer par l'unité centrale de traitement (PC), pour activer la fonction qui leur est propre. Ainsi une commande de pilotage reçu par un module est interprétée comme un signal de déclenchement de la fonction qui lui est associée. Cette approche asynchrone permet de piloter le microscope et ses modules fonctionnels au mieux de leur propre rapidité d'exécution, assurant ainsi une acquisition d'images ultra-rapide.

Aussi, selon le mode de réalisation particulier présenté ici, le dispositif de gestion 30 interagit directement avec le module de contrôle 20 pour orchestrer les commandes de pilotage aux modules fonctionnels. C'est donc le module de contrôle 20 qui effectue la distribution coordonnée des commandes de pilotage à chaque module fonctionnel, et la réception de leurs réponses. Une variante de réalisation sans module de contrôle (c'est-à-dire dans laquelle le dispositif de gestion 30 interagit directement avec le microscope 11) peut également être envisagée sans sortir du cadre de l'invention, étant entendu que la nature des commandes de pilotage devant être adaptée en fonction de la nature des modules concernés et de l'architecture matérielle du système d'imagerie le cas échéant.

### Configuration préalable du système d'imagerie

Avant la mise en oeuvre du procédé de gestion, l'utilisateur procède à une configuration du système d'imagerie S100. Cette configuration consiste à paramétrer, par l'intermédiaire d'une interface homme-machine, un certain nombre d'éléments nécessaires à la mise en place du scénario expérimental choisi par l'utilisateur, et notamment : les séquences de commandes prédéfinies, les paramètres d'acquisition associés, les modalités de traitement d'image, et les conditions d'interruption de séquence.

Prenons le cas d'un scénario expérimental de microscopie par fluorescence de cellules en cours de mitose requérant un ensemble de trois séquences S1, S2 et S3 prédéfinies, comme illustré, à titre d'exemple, dans le **Tableau 1** suivant :

**[Tableau 1]**

| Séquence S1 | | Séquence S2 | | Séquence S3 | |
|---|---|---|---|---|---|
| Commandes de pilotage | Paramètres d'acquisition P1 | Commandes de pilotage | Paramètres d'acquisition P2 | Commandes de pilotage | Paramètres d'acquisition P3 |
| CMD1 | P = k mW | CMD1 | P = k mW | CMD1 | P = 10 x k mW |
| CMD2 | λₑ = 480 nm | CMD2 | λₑ = 480 nm | CMD2 | λₑ = 480 nm |
| CMD3 | (x,y,z) = (0+jx₀,0+jy₀,0) avec j = 1 à n | CMD3 | (x,y,z) = (_,_,_) | CMD3 | (x,y,z) = (_,_,_) |
| CMD4 | n = 100 | CMD4 | n = 100 | CMD4 | n = 1000 |
| | tₑₓₚ = 0,55 | | tₑₓₚ = 0,55 | | tₑₓₚ = 0,055 |
| | v = 2 image/s | | v = 0,1 image/s | | v = 20 images/s |
| CMD5 | λ_{f} = 500-550 nm | CMD5 | λ_{f} = 500-550 nm | CMD5 | λ_{f} = 500-550 nm |
| CMD6 | G = 10x | CMD6 | G = 100x | CMD6 | G = 100x |

La séquence S1 est une séquence de commandes prédéfinie de premier type, dédiée à la recherche de cellules en cours de mitose. Elle sera exécutée à l'initialisation du procédé pour démarrer l'expérimentation. Cette séquence S1 comprend les commandes de pilotage CMD1 à CMD6, définies par les paramètres d'acquisition P1 tels qu'illustrés dans le tableau 1 ci-dessus. Cette séquence S1 est caractérisée par un jeu de paramètres totalement prédéfinis permettant au dispositif d'imagerie 10 d'acquérir des images en fluorescence plein champ à faible grossissement de différentes parties de l'échantillon E. Entre chaque image de la séquence S1, un déplacement vers une position indexée par la variable j permet de former au fur et à mesure une mosaïque d'images I1-ij. Une fois les n images constituant la mosaïque acquises, le système recommence une nouvelle mosaïque indexée par la variable i. Les variables i et j sont des entiers strictement supérieurs à zéro. La condition d'interruption de la séquence S1 est notée IC1. Cette condition IC1 est satisfaite si au moins une cellule en cours de mitose est détectée dans l'image courante. Dans ce cas, l'acquisition de la mosaïque d'images en cours est alors interrompue.

La séquence S2 est une séquence de commandes prédéfinie de deuxième type, dédiée au suivi d'une cellule en cours mitose. Cette séquence S2 comprend les commandes de pilotage CMD1 à CMD6, définies par les paramètres d'acquisition P2 tels qu'illustrés dans le tableau 1. Cette séquence S2 est caractérisée par un jeu de paramètres partiellement prédéfinis permettant d'acquérir, à fréquence modérée, des images plein champ et grossies de l'échantillon, à la position spécifique de la cellule en cours de mitose détectée au cours de la séquence S1. Ce jeu de paramètres P2 comprend uniquement des paramètres d'acquisition prédéfinis par l'utilisateur, sauf le paramètre de la commande CMD3 (relatif aux coordonnées de position de l'échantillon E), qui sera défini de manière dynamique pendant l'exécution du procédé. En effet, l'invention prévoit la possibilité de paramétrer, de manière automatique et dynamique, une ou plusieurs commandes de pilotage en fonction de l'analyse d'image réalisée en temps réel sur l'échantillon au cours de la séquence S1. La condition d'interruption de la séquence S2 est notée IC2. Cette condition IC2 est satisfaite si un stade (ou événement) particulier de la mitose est détecté dans les images (comme par exemple la transition métaphase-anaphase pour observer la migration des chromatides soeurs vers les pôles).

La séquence S3 est une séquence de commandes prédéfinie de troisième type, caractérisée par un jeu de paramètres partiellement prédéfinis permettant d'acquérir des images plein champ et grossies de l'échantillon à très haute vitesse à un stade particulier de la mitose (transition métaphase-anaphase). Cette séquence S3 comprend les commandes de pilotage CMD1 à CMD6, définies par les paramètres d'acquisition P3 tels qu'illustrés dans le tableau 1. Dans ce jeu de paramètres, seul le paramètre de la commande CMD3 relatif aux coordonnées de positionnement (x,y,z) de l'échantillon E est définissable de manière dynamique pendant l'exécution du procédé, les autres paramètres étant tous prédéfinis à l'avance. Aucune condition d'interruption de la séquence S3 n'est définie ici. A noter la puissance lumineuse qui est 10 fois plus forte que celle définie aux séquences S1 et S2 (on prendra le facteur k comme étant sensiblement égal à 500 à titre d'exemple). A noter que la numérotation des commandes de pilotage décrites ci-dessus ne conditionne pas l'ordre dans lequel elles sont exécutées par le dispositif de gestion 30. Ainsi, chaque séquence sera définie de manière à ce que l'ordre d'envoi des commandes aux modules fonctionnels permette un pilotage optimal de ces modules, sachant qu'une même commande peut être utilisée plusieurs fois dans une même séquence. Tous ces éléments de paramétrage sont chargés via l'interface logicielle exécutée sur l'ordinateur 40, et envoyés au dispositif de gestion 30 pour mise en oeuvre du procédé de gestion.

### Exécution de l'algorithme de gestion selon l'invention

Une fois la configuration précitée terminée, l'utilisateur initialise le procédé de l'invention via son interface homme-machine. On considère que l'échantillon E placé sur la platine porte-échantillon 111 et que les séquences de commande s'exécutent consécutivement les unes à la suite des autres.

On note par la suite la variable i, la i^{ème} itération d'une séquence de commandes donnée.

A l'étape **100**, le dispositif de gestion 30 exécute une première itération de la séquence de commandes S1 pour acquérir une première série I1-i d'images de l'échantillon E suivant l'indexation j pour obtenir une mosaïque d'images selon le jeu de paramètres d'acquisition P1.

A titre d'exemple, la séquence de commandes S1 est définie comme suit : CMD1-CMD2- CMD5-CMD6-(CMD3j-CMD4)".

Après complétion de l'exécution d'une séquence S1, la variable i est incrémentée de la valeur 1 afin d'exécuter l'itération suivante (i+1) de la séquence S1.

La première itération (i = 1) de la séquence S1 vise à initier la phase de recherche des cellules en mitose. Lors de son exécution, les commandes de pilotage CMD1 à CMD6 sont envoyées au dispositif d'imagerie 10, via le module de contrôle 20, sur la base de la séquence S1 définie ci-dessus, chaque module fonctionnel recevant la commande de pilotage qui lui est destinée. Si une commande de pilotage a été prédéfinie en fonction de la valeur de la variable j, comme c'est le cas pour la commande CMD3, la valeur affectée à la variable j est prise en compte lors de l'exécution de l'étape 100.

Si l'on se réfère au tableau 1 ci-dessus, la variable j associée à la commande CMD3 est comprise entre 1 et n, avec n = 100. La **figure 6** illustre le principe d'exécution des commandes CMD3j et CMD4 selon l'indexation j (notée « sous-séquence » par la suite). Ainsi, après que la commande CMD2 ait été exécutée, l'algorithme initialise la variable j à 1 et un test est effectué pour savoir si la variable j est différente de la valeur de n (n=100 ici). En cas de test positif, la commande CMD3j est exécutée pour la valeur courante affectée à j pour permettre positionner l'échantillon à la position (0+jx0,0+jy0,0)), puis la commande CMD4 est exécutée pour permettre une capture d'image (I1-ij) à cette position. Après exécution des commandes CMD3j-CMD4, la variable j est incrémentée de la valeur 1 afin d'exécuter l'itération suivante (j+1) de la sous-séquence CMD3j et CMD4. Autrement dit, tant que la variable j est différente de n, une itération de ladite sous-séquence est réalisée afin de continuer à acquérir des images constituant la mosaïque. En cas de test négatif (si j = n), l'algorithme de la figure 6 prend fin. Cela signifie que la mosaïque d'images I1-1 est terminée.

Ainsi, la première itération de la séquence S1 permet d'acquérir une première mosaïque d'images I1-1 plein champ de l'échantillon E, chaque image I1-1j de la mosaïque étant associée à une position distincte du porte-échantillon (0+jx₀, 0+jy₀, 0).

L'étape **200** consiste à vérifier, par analyse d'image, si la condition d'interruption IC1 a été satisfaite au cours de l'itération courante i de la séquence S1. La condition d'interruption IC1 est satisfaite si au moins une cellule en mitose est détectée dans l'image courante I1-1j de la série d'images.

Pour ce faire, le dispositif de gestion 30 procède à une analyse de l'image courante I1-1j par le module M4, à la recherche d'une singularité fluorescente représentative d'une cellule en cours de mitose. Notons que cette analyse d'image est réalisée en parallèle de l'exécution de la séquence S1.

Bien entendu, diverses méthodes connues de l'Homme du Métier de détection ou de reconnaissance d'objets dans une image peuvent être utilisées par le dispositif pour procéder à l'analyse d'image, telles que par exemple une méthode d'apprentissage automatique profond (aussi appelée « *deep learning* »), une méthode basée sur l'application d'un filtre numérique prédéfini (Gabor, Gaussien, filtre par motif), la segmentation d'image, la reconnaissance de texture, la conversion de données photométriques de teinte et de saturation d'image ou encore sur une méthode d'auto-corrélation de caractéristiques d'image. L'Homme du Métier, connaissant ces méthodes, est en mesure d'adapter l'algorithme exécuté à l'étape 200 aux caractéristiques de l'invention.

En cas de vérification positive, l'itération courante de la séquence S1 est interrompue et l'algorithme passe à l'étape 300 pour l'exécution d'une nouvelle séquence de commandes. En cas de vérification négative, aucune interruption dans l'exécution de la séquence S1 n'est réalisée et la succession des séquences courantes S1 continue de s'exécuter.

Dans l'exemple illustré ici, le dispositif de gestion 30 ne détecte aucune cellule en cours de mitose dans la première série d'images I1-1j (acquise au cours de la première itération (i = 1). Tant que la condition d'interruption IC n'est pas vérifiée, les séquences S1 continue d'être exécutées consécutivement sans être interrompues. En d'autres termes, le dispositif de gestion 30 réitère l'étape 100 (avec incrémentation de la variable i (i + 1) pour la séquence S1 et celle de la variable j (j+1) pour la sous-séquence CMD3j-CMD4) et l'étape 200 tant qu'aucune cellule en mitose n'est détectée.

Si au bout de N itérations de la séquence S1 (soit i = N, avec n un entier positif non nul prédéfini par l'utilisateur lors de la configuration du système (par exemple N = 10)), aucune cellule en cours de mitose n'a été détectée dans les images acquises, le dispositif de gestion décide d'interrompre tout de même la séquence S1 en cours d'exécution afin de basculer directement sur une autre séquence de commandes ou bien afin de stopper les étapes du procédé à des fins de reconfiguration du système d'imagerie. De manière alternative, cette décision d'interruption peut être prise par le dispositif de gestion non pas en tenant compte d'un nombre prédéterminé d'itérations, mais en tenant compte d'une durée prédéterminée. Par exemple, le dispositif de gestion 30 peut décider d'interrompre la séquence S1 d'exécution au bout de 5 minutes d'exécution de celle-ci.

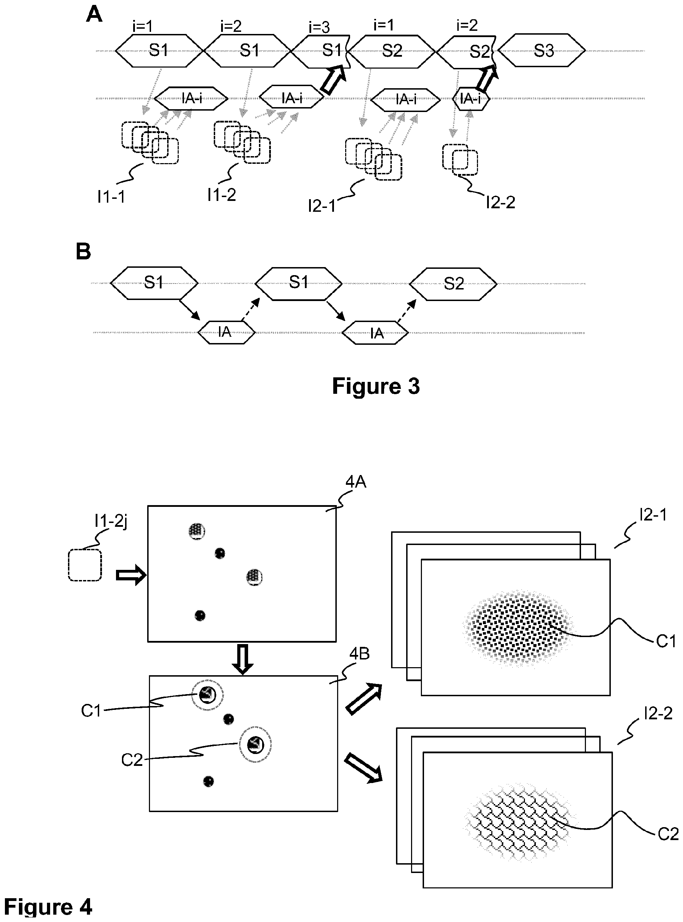

Si l'on fait référence au chronogramme A de la figure 3 par exemple, on s'aperçoit que la condition d'interruption IC1 n'est vérifiée qu'au cours de la 3^{ème} itération (i=3) de l'exécution de la séquence S1. En effet, comme illustré schématiquement sur la figure 4, le dispositif de gestion 30 a détecté deux cellules en cours de mitose (référencées C1 et C2) dans l'image plein champ courante I1-2j de la deuxième série d'images I1-2, satisfaisant ainsi la condition IC1 requise à l'étape 200. Le dispositif de gestion 30 extrait alors des informations résultant de l'analyse de l'image courante I1-2j relatives aux caractéristiques des cellules détectées C1 et C2, et les stockent dans une table locale. Ces informations permettront d'aider à la définition dynamique des paramètres d'acquisition des prochaines séquences de commandes selon l'invention. Par exemple, le dispositif de gestion 30 détermine les coordonnées de la position de chacune des cellules C1 et C2 dans l'image courante I1-2, typiquement les coordonnées (x1,y1) et (x2,y2) pour les cellules C1 et C2 respectivement, puis stockent ces informations dans sa table locale. Le dispositif de gestion 30 peut décider de retourner l'image courante à l'ordinateur 40 pour l'afficher à l'utilisateur via son interface homme-machine. Dans une variante de réalisation, ces informations sont stockées directement dans une table distante du dispositif, par exemple dans une mémoire de l'ordinateur 40.

Comme illustré sur les chronogrammes A et B de la figure 3, l'analyse IA-2 de l'image courante I1-2j selon le procédé est effectuée au cours même de l'itération courante (i=2) de la séquence de commandes S1 (Chronogramme A), contrairement au procédé de l'art antérieur selon lequel l'analyse d'image IA est effectuée après complétion d'une itération d'une séquence de commandes (Chronogramme B).

Selon une mise en oeuvre particulière, dont le principe est illustré en figure 4, l'analyse d'image repose sur une phase de segmentation de l'image acquise à l'aide d'un seuillage numérique en niveau de gris adapté à la nature de la cellule d'intérêt recherchée. Cette phase de segmentation permet de décomposer l'image acquise en différentes régions d'image et de mettre en évidence des cellules potentiellement d'intérêt.

L'illustration 4A représente de manière schématique l'image I1-2j de la deuxième série d'images I1-2 obtenue au cours de la deuxième itération de la séquence S1, et l'illustration 4B représente cette même image après avoir appliqué le seuillage en niveau de gris précité. Chaque portion d'image potentiellement d'intérêt, dite vignette, est traitée séparément par le dispositif de gestion 30, et les données d'image associées à cette vignette sont comparées avec un modèle prédéterminé en utilisant par exemple un algorithme d'apprentissage profond, afin d'attribuer à cette vignette un niveau de probabilité d'appartenance à la classe des cellules en cours de mitose. Un seuil de probabilité est prédéfini par l'utilisateur au moment de la configuration du système d'imagerie en fonction de l'expérience de microscopie à mener, en particulier en fonction du taux de faux positifs ou de faux négatifs souhaités par celui-ci. Ainsi, selon une mise en oeuvre particulière, la condition d'interruption est dite vérifiée si le niveau de probabilité attribué à une vignette (soit une cellule potentiellement d'intérêt) est supérieur au seuil prédéfini, par exemple supérieur à 80%. Dans l'exemple illustré ici, le dispositif de gestion 30 considère que les singularités fluorescentes repérées dans l'image i1-2j, matérialisées par les références C1 et C2 sur la figure, sont des cellules en cours de mitose et que par conséquent la condition d'interruption est vérifiée.

Dès que la condition d'interruption est vérifiée, le dispositif de gestion 30 interrompt, à l'étape 300, l'itération courante i de la séquence S1 (la troisième itération dans le cas d'espèce), et exécute, pour chacune des cellules C1 et C2 détectées, une itération de la séquence de commandes prédéfinie S2 selon le jeu de paramètres d'acquisition P2. Selon l'invention, le jeu de paramètres P2 est automatiquement adapté aux informations résultant de l'analyse de l'image I1-2j. Il y aura donc autant de séquences S2 à exécuter que de cellules détectées par analyse d'image, soit une première itération de la séquence S2 pour la cellule en mitose C1 et une deuxième itération de cette même séquence pour la cellule en mitose C2.

A titre d'exemple, la séquence de commandes S2 est définie comme suit : CMD1-CMD2- CMD6-CMD5-CMD3-(CMD4)ⁿ. Si l'on se réfère au tableau 1 ci-dessus, la variable n est égal à 100, et la vitesse d'acquisition des n images est relativement faible (une image toutes les 10 secondes). Le facteur de grossissement G est par ailleurs passé de 10x à 100x.

Pour ce faire, le dispositif de gestion 30 extrait, à partir sa table locale, les informations associées à la cellule C1 résultant de l'analyse de l'image I1-2j, à savoir les coordonnées d'image de la cellule C1 (X1,Y1), et définit de manière dynamique le paramètre de la commande CMD3 en fonction de ces coordonnées d'image (X1,Y1). Dans le présent exemple, ce sont les coordonnées spatiales (x,y,z) de la platine porte-échantillon 111 qui sont définies en temps réel dans la commande CMD3 en fonction des coordonnées d'image de la cellule concernée. Les autres paramètres des commandes de la séquence S2 étant prédéfinis, ceux-ci restent inchangés. Le dispositif de gestion 30 exécute alors une première itération de la séquence de commandes S2 pour acquérir une série I2-1 de n images plein champ et grossies de l'échantillon E, ciblées sur la cellule C1. Le dispositif de gestion 30 renvoie les images acquises au fur et à mesure à l'ordinateur 40 à des fins d'affichage à l'utilisateur et/ou de stockage.

De même, pour la cellule C2, le dispositif de gestion 30 extrait, à partir sa table locale, les coordonnées d'image (X2,Y2) de la cellules C2 et définit de manière dynamique le paramètre de la commande CMD3 en fonction de ces coordonnées d'image (X2,Y2). Le dispositif de gestion 30 exécute alors une deuxième itération de la séquence de commandes S2 (consécutivement à la première itération) pour acquérir une série I2-2 de n images plein champ et grossies de l'échantillon E, ciblées cette fois-ci sur la cellule C2. Le dispositif de gestion 30 renvoie les images acquises au fur et à mesure à l'ordinateur 40 à des fins d'affichage à l'utilisateur et/ou de stockage.

Ainsi, cette mise en oeuvre particulière permet de réaliser un traitement séparé des cellules portant un intérêt pour l'expérience. Le fait de s'arrêter immédiatement sur les cellules d'intérêt et de les imager avec des caractéristiques d'acquisition adaptées en temps réel permet une acquisition plus rapide de ces cellules, ce qui permet d'augmenter significativement les chances d'observation et de capture de phénomènes cellulaires éphémères. Par ailleurs, le fait de limiter la quantité d'images sans intérêts rend le traitement des données plus rapide.

On présente ci-après une mise en oeuvre en cascade du mécanisme d'interruption discuté ci-dessus.

Après avoir interrompu la séquence de commandes S1, le procédé de l'invention est configuré de sorte que la séquence de commandes S2 puisse elle-même être interrompue au cours de son exécution par une autre séquence de commandes, nommée séquence S3, cette interruption de séquence étant conditionnée par une deuxième condition d'interruption IC2.

Ainsi, en parallèle de la séquence de commandes S2, le dispositif 30 est configuré pour qu'une itération courante de la séquence S2 puisse être interrompue sur vérification positive, par analyse d'image, de la condition d'interruption IC2 au cours de l'itération courante. Ceci est illustré à l'étape **400** du procédé. La condition d'interruption IC2 est définie par la détection dans au moins une des images acquises dans la séquence S2 courante d'une phase d'intérêt de la mitose, telle que la transition métaphase-anaphase par exemple (migration des chromatides soeurs vers les pôles opposés de la cellule en cours de mitose).

Le dispositif de gestion 30 procède donc, au cours de l'itération de la séquence S2, à une vérification, par analyse d'image de l'image courante, que la cellule est en cours de transition métaphase-anaphase. En cas de vérification positive, l'itération courante de la séquence S2 est interrompue et l'algorithme passe à l'étape **500** pour l'exécution de la séquence de commandes S3. En cas de vérification négative, aucune interruption dans l'exécution de la séquence S2 n'est réalisée et la séquence courante S2 continue de s'exécuter sans changement.

Dans l'exemple illustré ici, le dispositif de gestion 30 détecte au cours de la deuxième itération de la séquence S2, par analyse des images I2-2 acquises, que la cellule C2 est en transition métaphase-anaphase. Sur détection, il procède alors à l'interruption de l'itération courante de la séquence S2 et à l'exécution de la séquence de commandes prédéfinie S3, à des fins d'acquisition rapide de ce phénomène de division cellulaire.

A titre d'exemple, la séquence de commandes S3 est définie comme suit : CMD1-CMD2- CMD6-CMD5-CMD3-(CMD4)ⁿ. Si l'on se réfère au tableau 1 ci-dessus, la variable n est égal à 1000 et la vitesse d'acquisition des n images est relativement rapide (20 images par seconde). La puissance lumineuse est par ailleurs multipliée par 10. Le facteur de grossissement G reste identique (100x).

Dans cet exemple, le dispositif de gestion 30 définit de manière dynamique le paramètre de la commande CMD3 en fonction d'informations résultant de l'analyse des images I2-2 (sur la base du principe de calcul de coordonnées précité). Par exemple, il est possible que le dispositif de gestion 30 réajuste les coordonnées spatiales du porte-échantillon en fonction des coordonnées d'image relatives à la position de la cellule C2 dans l'image, afin d'acquérir des images encore plus ciblées sur le phénomène d'anaphase se déroulant au sein de la cellule en mitose. Les images acquises sont renvoyées à l'utilisateur via l'interface homme-machine associée à l'ordinateur 40. Une fois la séquence S3 terminée, soit l'algorithme prend fin (fin de l'expérimentation), soit de nouvelles itérations de la séquence S1 sont exécutées par le dispositif.

A des fins de simplification de la description, les séquences de commandes présentées dans l'exemple ci-dessus reposent sur un paramétrage relativement simple et non exhaustif. D'autres variantes de paramétrage et de séquençage de commandes plus ou moins complexes sont bien entendu envisageables sans sortir du cadre de l'invention. A titre d'exemple, on pourrait envisager d'intégrer, dans une séquence, des commandes de pilotage permettant :
- de positionner le plan focal du système optique, à différents niveaux de profondeur de l'échantillon E (typiquement quelques centaines de nanomètres selon l'axe z), afin de réaliser des images de « coupes optiques » de l'échantillon E à partir desquelles une représentation tridimensionnelle en haute résolution pourrait être obtenue ; et/ou
- de régler la surface d'ouverture d'un couple de diaphragmes d'entrée et de sortie afin de contrôler la quantité de lumière éclairant l'échantillon ; et/ou
- de réaliser une mise au point automatique du système optique (aussi appelée « Autofocus ») sur l'échantillon (par exemple dans le cas d'imagerie de microscopie à faible profondeur de champ) ; et/ou
- de sélectionner et d'activer une nouvelle source de lumière, par exemple une diode laser dont la longueur d'onde d'excitation permet d'activer et/ou de désactiver une protéine contenue dans une cellule d'intérêt (méthode connue sous le nom de photo-manipulation), de photo-convertir un protéine fluorescente, ou d'opérer une microdissection (méthode connue sous le nom de nano-ablation laser).

Tout ou partie de ces commandes de pilotage peuvent prévoir des paramètres préalablement définissable et/ou dynamiquement définissable conformément au principe de l'invention.

Enfin, on peut envisager que les modalités d'acquisition soit manuellement modifiables par l'utilisateur en cours d'exécution de l'algorithme de gestion, en fonction des résultats de l'analyse d'image obtenus : ajout, suppression ou modification d'une séquence prédéfinie, modification, ajout, suppression ou modification de commandes de pilotage, modification des modalités de traitement d'image, etc.

La **figure 5** représente, de manière schématique et simplifiée, la structure d'un dispositif de gestion dans un mode de réalisation particulier, par exemple le dispositif 30 représenté sur la figure 2 mettant en oeuvre le procédé de gestion selon l'invention (par exemple l'algorithme décrit ci-dessus en relation avec les figures 1 et 2). Ce dispositif comprend une mémoire vive 53 (par exemple une mémoire RAM), une unité de traitement 51 (noté CPU), équipée par exemple d'un processeur ou microprocesseur, et pilotée par un programme d'ordinateur stocké dans une mémoire morte 52 (par exemple une mémoire ROM ou un disque dur). A l'initialisation, les instructions de code du programme d'ordinateur sont par exemple chargées dans la mémoire vive 53 avant d'être exécutées par le processeur de l'unité de traitement 51. Un tel programme d'ordinateur permet l'exécution des étapes de l'algorithme de la figure 1 décrite ci-dessus (étapes 100 à 500). L'unité de traitement 51 reçoit en entrée des données de configuration du système d'imagerie (représentées par la flèche 54) renseignée par l'utilisateur via l'interface logicielle avant l'initialisation du procédé. Le processeur de l'unité de traitement 51 exécute le procédé à partir des données d'entrée 54 et délivre en sortie les commandes de pilotage correspondantes (représentées par la flèche 55) à destination des modules fonctionnels, selon les instructions du programme 52.

Cette figure 5 illustre seulement une manière particulière, parmi plusieurs possibles, de réaliser les différents algorithmes détaillés ci-dessus, en relation avec la figure 1. En effet, le procédé de gestion selon l'invention se réalise indifféremment :
- sur une machine de calcul reprogrammable (un ordinateur PC, un processeur DSP ou un microcontrôleur) exécutant un programme comprenant une séquence d'instructions ; ou
- sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

La description ci-dessus porte sur la gestion de séquences de commandes envoyées successivement aux modules fonctionnels concernés. La présente invention ne se limite pas à ce cas particulier de séquencement. Elle peut s'appliquer à tous les cas où un ensemble de commandes de pilotage doivent être exécutées successivement et/ou parallèlement par le dispositif de gestion. Ainsi, on parlera de « bloc(s) de commandes » pour englober le cas de commandes de pilotage exécutées successivement ou simultanément, ou encore une combinaison de ces deux modes d'exécution. L'envoi en parallèle de certaines commandes de pilotage permettra de gagner en rapidité de pilotage.

Enfin, la présente invention peut très bien s'appliquer à l'observation d'autres événements d'intérêt, comme par exemple des objets organiques et/ou inorganiques, ou encore des objets biologiques autres que des cellules.

## Revendications

1. Procédé de gestion de blocs de commandes destinés à un dispositif d'imagerie en microscopie configuré pour acquérir des images d'un échantillon, chaque bloc de commandes comprenant une pluralité de commandes de pilotage servant à piloter une pluralité de modules fonctionnels dudit dispositif, chaque commande étant définie par au moins un paramètre d'acquisition, ledit procédé comprenant une étape consistant à :
- exécuter (100) au moins une itération d'un premier bloc de commandes prédéfini (S1) pour acquérir au moins une première image dudit échantillon, ledit procédé étant **caractérisé en ce qu'**il comprend les étapes suivantes (300), sur vérification positive (200), par analyse d'image de ladite au moins une première image, d'une première condition d'interruption en parallèle de l'exécution d'une itération courante dudit premier bloc :
- interrompre ladite itération courante dudit premier bloc ; et
- exécuter au moins une itération d'un deuxième bloc de commandes prédéfini (S2) pour acquérir au moins une deuxième image dudit échantillon, au moins une commande dudit deuxième bloc étant définie par au moins un deuxième paramètre d'acquisition, lui-même défini dynamiquement en fonction d'au moins une information résultant de ladite analyse d'image.

2. Procédé selon la revendication 1, comprenant les étapes suivantes, sur vérification positive, par analyse d'image de ladite au moins une deuxième image, d'une deuxième condition d'interruption au cours d'une itération courante dudit deuxième bloc :
- interrompre ladite itération courante dudit deuxième bloc ; et
- exécuter au moins une itération d'un troisième bloc de commandes prédéfini (S3) pour acquérir au moins une troisième image dudit échantillon, au moins une commande dudit troisième bloc étant définie par au moins un troisième paramètre d'acquisition, lui-même prédéfini ou défini dynamiquement en fonction d'au moins une information résultant de l'analyse de ladite au moins une deuxième image.

3. Procédé selon la revendication 2, dans lequel les première et deuxième conditions d'interruption appartiennent au groupe comprenant :
- détection d'au moins un événement d'intérêt au cours de ladite analyse d'image ;
- absence d'événement d'intérêt au cours de ladite analyse d'image ;

4. Procédé selon la revendication 3, en ce que si une pluralité d'événements d'intérêt est détectés, il comprend, pour chaque événement d'intérêt de la pluralité :
- exécuter ladite au moins une itération du deuxième bloc pour ledit événement d'intérêt ;
- définir dynamiquement ledit au moins un deuxième paramètre d'acquisition en fonction d'au moins une information résultant de ladite analyse d'image associé audit événement d'intérêt.

5. Procédé selon l'une quelconque des revendications 3 et 4, ladite au moins une information appartient au groupe comprenant :
- une information relative à la nature dudit moins un événement d'intérêt ;
- une information de position dudit moins un événement d'intérêt.

6. Procédé selon l'une quelconque des revendications 2 à 5, dans lequel les commandes de pilotage desdits premier, deuxième et troisième blocs de commandes appartiennent au groupe comprenant :
- sélection d'une source de lumière d'excitation de l'échantillon ;
- sélection d'au moins un paramètre d'une source de lumière d'excitation de l'échantillon ;
- sélection de longueur d'onde d'excitation de l'échantillon ;
- déplacement spatial de l'échantillon ;
- capture d'image de l'échantillon ;
- sélection de longueur d'onde de détection ;
- réglage d'au moins un paramètre d'un système optique.

7. Procédé selon l'une quelconque des revendications 2 à 6, dans lequel les premier, deuxième et troisième paramètres d'acquisition appartiennent au groupe comprenant :
- une donnée représentative d'un type de source lumineuse à activer ;
- une donnée représentative d'une valeur de puissance lumineuse ;
- une donnée représentative d'un nombre d'images à acquérir ;
- une donnée représentative d'une valeur de fréquence d'acquisition ;
- une donnée représentative d'une valeur ou plage de valeurs de longueurs d'onde d'excitation ;
- une donnée représentative d'au moins une coordonnée spatiale relative à la position de l'échantillon ;
- une donnée représentative d'une valeur ou plage de valeurs de longueurs d'onde de détection ;
- une donnée représentative d'une valeur de grossissement du système optique.

8. Produit programme d'ordinateur comprenant des instructions de code de programme pour la mise en oeuvre du procédé de gestion de blocs de commandes selon au moins une des revendications 1 à 7, lorsque ledit programme est exécuté sur un ordinateur.

9. Moyen de stockage lisible par ordinateur et non transitoire, stockant un produit programme d'ordinateur selon la revendication 8.

10. Dispositif de gestion de blocs de commandes destinés à un dispositif d'imagerie en microscopie configuré pour acquérir des images d'un échantillon, chaque bloc de commandes comprenant une pluralité de commandes de pilotage servant à piloter une pluralité de modules fonctionnels dudit dispositif, chaque commande étant définie par au moins un paramètre d'acquisition, ledit dispositif comprenant :
- des moyens configurés pour exécuter au moins une itération d'un premier bloc de commandes prédéfini (S1) afin d'acquérir au moins une première image dudit échantillon,
ledit dispositif étant **caractérisé en ce qu'**il comprend :
- des moyens configurés pour vérifier, par analyse d'image de ladite au moins une première image, une première condition d'interruption en parallèle de l'exécution d'une itération courante dudit premier bloc ;
- des moyens configurés pour décider, en cas de vérification positive de la première condition d'interruption :
* d'interrompre ladite itération courante dudit premier bloc, et
* d'exécuter au moins une itération d'un deuxième bloc de commandes prédéfini (S2) pour acquérir au moins une deuxième image dudit échantillon, au moins une commande dudit deuxième bloc étant définie par au moins un deuxième paramètre d'acquisition, lui-même défini dynamiquement en fonction d'au moins une information résultant de ladite analyse d'image.

## Patentansprüche

1. Verfahren zur Verwaltung von Blöcken von Befehlen, die für eine Mikroskopieabbildungsvorrichtung vorgesehen sind, das eingerichtet ist, um Bilder einer Probe zu erfassen, wobei jeder Befehlsblock eine Vielzahl von Steuerbefehlen umfasst, die dazu dienen, eine Vielzahl von Funktionsmodulen der Vorrichtung zu steuern, wobei jeder Befehl durch mindestens einen Erfassungsparameter definiert ist, wobei das Verfahren einen Schritt umfasst, darin bestehend:
- mindestens eine Iteration eines ersten vordefinierten Befehlsblocks (S1) auszuführen (100), um mindestens ein erstes Bild der Probe zu erfassen,
wobei das Verfahren **dadurch gekennzeichnet ist, dass** es die folgenden Schritte (300) bei positiver Überprüfung (200) durch Bildanalyse des mindestens einen ersten Bildes einer ersten Unterbrechungsbedingung parallel zur Ausführung einer laufenden Iteration des ersten Blocks umfasst:
- Unterbrechen der laufenden Iteration des ersten Blocks; und
- Ausführen mindestens einer Iteration eines zweiten vordefinierten Befehlsblocks (S2), um mindestens ein zweites Bild der Probe zu erfassen, wobei mindestens ein Befehl des zweiten Blocks durch mindestens einen zweiten Erfassungsparameter definiert ist, der selbst dynamisch in Abhängigkeit von mindestens einer Information, die sich aus der Bildanalyse ergibt, definiert ist.

2. Verfahren nach Anspruch 1, umfassend die folgenden Schritte bei positiver Überprüfung durch Bildanalyse des mindestens einen zweiten Bildes einer zweiten Unterbrechungsbedingung während einer laufenden Iteration des zweiten Blocks:
- Unterbrechen der laufenden Iteration des zweiten Blocks; und
- Ausführen mindestens einer Iteration des dritten vordefinierten Befehlsblocks (S3), um mindestens ein drittes Bild der Probe zu erfassen, wobei mindestens ein Befehl des dritten Blocks durch mindestens einen dritten Erfassungsparameter definiert ist, der selbst dynamisch in Abhängigkeit von mindestens einer Information, die sich aus der Analyse des mindestens einen zweiten Bildes ergibt, vordefiniert oder definiert ist.

3. Verfahren nach Anspruch 2, bei dem die erste und zweite Unterbrechungsbedingung der Gruppe angehört, umfassend:
- Erkennen mindestens eines Ereignisses von Interesse während der Bildanalyse;
- Fehlen eines Ereignisses von Interesse während der Bildanalyse.

4. Verfahren nach Anspruch 3, **dadurch gekennzeichnet, dass** es, wenn eine Vielzahl von Ereignissen von Interesse erkannt werden, für jedes Ereignis von Interesse aus der Vielzahl umfasst:
- Ausführen der mindestens einen Iteration des zweiten Blocks für das Ereignis von Interesse;
- dynamisches Definieren des mindestens einen zweiten Erfassungsparameters in Abhängigkeit von mindestens einer Information, die sich aus der dem Ereignis von Interesse zugeordneten Bildanalyse ergibt.

5. Verfahren nach einem der Ansprüche 3 und 4, wobei die mindestens eine Information der Gruppe angehört, umfassend:
- eine Information zur Natur des mindestens einen Ereignisses von Interesse;
- eine Information zur Position des mindestens einen Ereignisses von Interesse.

6. Verfahren nach einem der Ansprüche 2 bis 5, bei dem die Steuerbefehle der ersten, zweiten und dritten Befehlsblöcke der Gruppe angehören, umfassend:
- Auswahl einer Erregerlichtquelle der Probe;
- Auswahl mindestens eines Parameters einer Erregerlichtquelle der Probe;
- Auswahl einer Erregerwellenlänge der Probe;
- räumliche Verlagerung der Probe;
- Bildaufnahme der Probe;
- Auswahl einer Erkennungswellenlänge;
- Einstellung mindestens eines Parameters eines optischen Systems.

7. Verfahren nach einem der Ansprüche 2 bis 6, bei dem die ersten, zweiten und dritten Erfassungsparameter der Gruppe angehören, umfassend:
- ein für einen zu aktivierenden Lichtquellentyp repräsentatives Datum;
- ein für einen Lichtleistungswert repräsentatives Datum;
- ein für eine zu erfassende Bildanzahl repräsentatives Datum;
- ein für einen Erfassungsfrequenzwert repräsentatives Datum;
- ein für einen Erregerwellenlängenwert oder -bereich repräsentatives Datum;
- ein für mindestens eine Raumkoordinate in Zusammenhang mit der Position der Probe repräsentatives Datum;
- ein für einen Erkennungswellenlängenwert oder -bereich repräsentatives Datum;
- ein für einen Vergrößerungswert des optischen Systems repräsentatives Datum.

8. Computerprogrammprodukt, umfassend Programmcodeanweisungen für den Einsatz des Verfahrens zur Verwaltung von Befehlsblöcken nach mindestens einem der Ansprüche 1 bis 7, wenn das Programm auf einem Computer ausgeführt wird.

9. Speichervorrichtung, die von einem Computer lesbar und nicht transient ist, die ein Computerprogrammprodukt nach Anspruch 8 speichert.

10. Vorrichtung zur Verwaltung von Blöcken von Befehlen, die für eine Mikroskopieabbildungsvorrichtung vorgesehen sind, die eingerichtet ist, um Bilder einer Probe zu erfassen, wobei jeder Befehlsblock eine Vielzahl von Steuerbefehlen umfasst, die dazu dienen, eine Vielzahl von Funktionsmodulen der Vorrichtung zu steuern, wobei jeder Befehl durch mindestens einen Erfassungsparameter definiert ist, wobei die Vorrichtung umfasst:
- Mittel, die eingerichtet sind, um mindestens eine Iteration eines ersten vordefinierten Befehlsblocks (S1) auszuführen, um mindestens ein erstes Bild der Probe zu erfassen,
wobei die Vorrichtung **dadurch gekennzeichnet ist, dass** sie umfasst:
- Mittel, die eingerichtet sind, um durch Bildanalyse des mindestens einen ersten Bildes eine erste Unterbrechungsbedingung parallel zur Ausführung einer laufenden Iteration des ersten Blocks zu überprüfen;
- Mittel die eingerichtet sind, um im Falle einer positiven Überprüfung der ersten Unterbrechungsbedingung:
* die laufende Iteration des ersten Blocks zu unterbrechen, und
* mindestens eine Iteration des zweiten vordefinierten Befehlsblocks (S2) auszuführen, um mindestens ein zweites Bild der Probe zu erfassen, wobei mindestens ein Befehl des zweiten Blocks durch mindestens einen zweiten Erfassungsparameter definiert ist, der selbst dynamisch in Abhängigkeit von mindestens einer Information, die sich aus der Bildanalyse ergibt, definiert wird.

## Claims

1. A method for managing blocks of commands intended for a microscopy imaging device configured to acquire images of a sample, each block of commands comprising a plurality of driving commands for driving a plurality of functional modules of said device, each command being defined by at least one acquisition parameter, said method comprising a step of:
- executing (100) at least one iteration of a first, predefined block of commands (S1) to acquire at least a first image of said sample,
said method being **characterised in that** it comprises the following steps (300), upon positive verification (200), by image analysis of said at least a first image, of a first stop condition in parallel with execution of a current iteration of said first block:
- stopping said current iteration of said first block; and
- executing at least one iteration of a second predefined block of commands (S2) to acquire at least a second image of said sample, at least one command of said second block being defined by at least a second acquisition parameter, itself dynamically defined as a function of at least one piece of information resulting from said image analysis.

2. The method according to claim 1, comprising the following steps, upon positive verification, by image analysis of said at least a second image, of a second stop condition during a current iteration of said second block:
- stopping said current iteration of said second block; and
- executing at least one iteration of a third predefined block of commands (S3) to acquire at least a third image of said sample, at least one command of said third block being defined by at least a third acquisition parameter, itself predefined or dynamically defined as a function of at least one piece of information resulting from the analysis of said at least a second image.

3. The method according to claim 2, wherein the first and second stop conditions belong to the group comprising:
- detection of at least one event of interest during said image analysis;
- absence of an event of interest during said image analysis.

4. The method according to claim 3, in that if a plurality of events of interest are detected, it comprises, for each event of interest of the plurality:
- executing said at least one iteration of the second block for said event of interest;
- dynamically defining said at least a second acquisition parameter depending on at least one piece of information resulting from said image analysis associated with said event of interest.

5. The method according to any of claims 3 and 4, said at least one piece of information belongs to the group comprising:
- one piece of information relating to the nature of said at least one event of interest;
- one piece of information of position of said at least one event of interest.

6. The method according to any of claims 2 to 5, wherein the driving commands of said first, second and third blocks of commands belong to the group comprising:
- selection of a sample excitation light source;
- selection of at least one parameter of a sample excitation light source;
- selection of the sample excitation wavelength;
- sample spatial displacement;
- sample image capture;
- detection wavelength selection;
- adjustment of at least one parameter of an optical system.

7. The method according to any of claims 1 to 6, wherein the first, second and third acquisition parameters belong to the group comprising:
- a piece of data representative of a type of light source to be activated;
- a piece of data representative of a light power value;
- a piece of data representative of a number of images to be acquired;
- a piece of data representative of an acquisition frequency value;
- a piece of data representative of a value or range of values of excitation wavelengths;
- a piece of data representative of at least one spatial coordinate relating to the sample position;
- a piece of data representative of a value or range of values of detection wavelengths;
- a piece of data representative of a magnification value of the optical system.

8. A computer program product comprising program code instructions for implementing the method for managing blocks of commands according to at least one of claims 1 to 7, when said program is executed on a computer.

9. A non-transitory, computer-readable storage medium storing a computer program product according to claim 8.

10. A device for managing blocks of commands intended for a microscopy imaging device configured to acquire images of a sample, each block of commands comprising a plurality of driving commands for driving a plurality of functional modules of said device, each command being defined by at least one acquisition parameter, said apparatus comprising:
- means configured to execute at least one iteration of a first, predefined block of commands (S1) in order to acquire at least a first image of said sample,
said device being **characterised in that** it comprises:
- means configured to verify, by image analysis of said at least a first image, a first stop condition in parallel with execution ofa current iteration of said first block;
- means configured to decide, in case of positive verification of the first stop condition:
* to stop said current iteration of said first block, and
* to execute at least one iteration of a second predefined block of commands (S2) for acquiring at least a second image of said sample, at least one command of said second block being defined by at least a second acquisition parameter, itself dynamically defined depending on at least one piece of information resulting from said image analysis.
